# EUROPEAN PATENT SPECIFICATION

(11) **EP 2 123 154 B1**
(45) Date of publication and mention of the grant of the patent: **15.06.2016**
(21) Application number: 09168397.9
(22) Date of filing: 08.03.2007
(51) Int. Cl.: A01K 63/04

(54) **Aquarium filter**
Aquarienfilter
Filtre d'aquarium

(30) Priority: 13.04.2006 US 791830 P; 05.10.2006 IT PD20060367
(43) Date of publication of application: 25.11.2009
(62) Divisional of application: 07103798.0
(73) Proprietor: Central Garden & Pet Company, Walnut Creek, CA 94597 (US)
(72) Inventor: Guoli, Giacomo, 20125, MILANO (IT); Bellia, Fabio, 35010, TREBASELEGHE (PD) (IT)
(74) Representative: Susanetto, Carlo

(56) References cited:
- WO-A-2004/047529
- US-A- 5 522 987
- US-A1- 2003 085 167
- US-A1- 2003 205 512

## Description

This invention relates to an aquarium filter of the type having the characteristics mentioned in the pre-characterizing clause of the main claim.

This invention particularly, although not exclusively, concerns the specific sector of filters for domestic aquariums, both freshwater and marine, in which the filtration element is located inside (internal filter) or outside (external filter) the tank.

In this technical field the filter performs the function of cleaning and purifying the water contained in the tank, maintaining an environment which is suitable for the survival of the animal and/or plant species immersed therein.

In this technical field, the main functions performed by the filter are listed below:
- Mechanical filtration: by using one or more layers of filtration material the solid waste in suspension is trapped.
- Chemical filtration: controls the concentration of potentially toxic substances, eliminating them by adsorption through a layer typically made up of activated carbon.
- Biological filtration: nitrogenous compounds such as, for example, ammonium as well as organic substances resulting from the decomposition of plants and residues of food are transformed into substances that are non-toxic or can be assimilated by living organisms. Usually this function is performed by colonies of bacteria populated on special supports.

A typical design constraint of aquarium filters is represented by the need to contain their size in relation to that of the tank. This makes the efficiency of filtration operations in small tanks particularly critical. In particular, so that the internal filter can perform its function by depriving the species that populate the aquarium of as little space and light as possible, it must be small, without affecting its specific filtration capability.

The use of aquarium filters made on the basis of the requirements of the above-mentioned specifications is widely known.

For example, cartridge filters are known which make aquarium maintenance considerably simpler, by using replaceable modules, particularly for the mechanical and chemical filtration stages.

In fact, mechanical and chemical filtration modules become blocked, thus losing their filtration properties over time. Chemical filters with activated carbons are particularly dangerous because, when they are saturated, they tend to put back into the water the toxic substances that they adsorbed.

In well-designed filters, these modules are in the form of compact removable cartridges which can be easily extracted and replaced without having to dismantle the filter.

There is a risk, however, that an inexperienced or careless user could inadvertently invert the direction of insertion of the cartridge and, consequently, its working position, thus compromising its operation.

In fact, in all applications of aquarium filters, the mechanical filter must precede both the chemical and biological one, given that the solid matter in suspension can limit or cancel out the efficiency of both the activated carbons and the bacteria. In the case of cartridges that comprise several filter modules, as the cartridge is cyclically removed to clean the mechanical filtration module, it is even more important that, when it is re-immersed, it is correctly positioned so as not to release the material retained into the tank.

The use of "wet-dry" biological filters is also known. These are semi-submersed devices in which, after an initial mechanical filtration and possibly a second chemical filtration, the water is aerated and exposed to extensive contact with aerobic bacteria which perform a biological filtration.

Aeration allows the concentration of oxygen in the water to be increased so as to increase the efficiency of the action of the bacteria.

Usually devices of the semi-submersed type are used as an alternative to those of the submersed type.

The main problem resulting from the applications of "wet/dry" biological filters is represented, compared to solutions of the submersed type, by the greater ease of sedimentation of solid components at the population sites of aerobic bacteria, whose filtration capacity is, for this reason, reduced.

In an aquarium filtration system, in addition to the filtration devices, the circulating pump is particularly important in that it must ensure an adequate and constant flow of water through the filtration route. This component is usually mounted outside the casing that contains the filtration chamber and is connected to it by means of a delivery tube, as e.g. described in US 5,522,987.

The main drawback of this solution is the size of the pump assembly and related tubes which limits the free space inside the aquarium and interferes with the passage of light. In order to overcome this, technical solutions are adopted in which the pump is mounted outside the aquarium, such as the one described in US 2003/205512. In this case the filter and pump assembly has the following drawbacks:
- the pump must be primed every time the filter is emptied;
- the space occupied by the pump detracts from the space available for the filtration cartridge;
- the pump must be connected to the aquarium by means of a special "syphon" riser tube;
- part of the hydraulic circuit including the pump and related sealing devices is outside the aquarium with the consequent risk of flooding in the event of failure or leakage.

The main aim of the present invention is to provide an aquarium filter which is structurally and operationally designed to overcome all of the drawbacks encountered in said known art.

This aim and others described below are tackled and resolved by the invention by means of an aquarium filter made in accordance with the claims below.

Further features and advantages of the invention will emerge from the following detailed description of a preferred embodiment which is shown by way of a non-limiting example in the accompanying drawings, in which:
- Figure 1 is a top plan view of an aquarium filter made in accordance with the invention;
- Figure 2 is a partial top plan view of the aquarium filter shown in Fig. 1;
- Figure 3 and Fig. 4 are two side views of two respective variants of a removable cartridge for filters made in accordance with the invention;
- Figure 5 is a section taken along Line V-V in Figure 1;
- Figure 6 is a section of the delivery tube of the circulating pump shown in Fig. 1;
- Figure 7 is a front elevation view of an example of an aquarium filter not in accordance to the present invention;
- Figure 8 is a section taken along Line VIII-VIII in Figure 9;
- Figure 9 is a bird's eye plan view of the aquarium filter of Figure 7;
- Figure 10 is a section taken along Line X-X of Figure 9;
- Figures 11 and 12 are, respectively, plan and section views along Line XII-XII of Figure 11 of a filtration cartridge for aquariums according to the invention;
- Figure 13 is a perspective view of the filter shown in Figure 1.

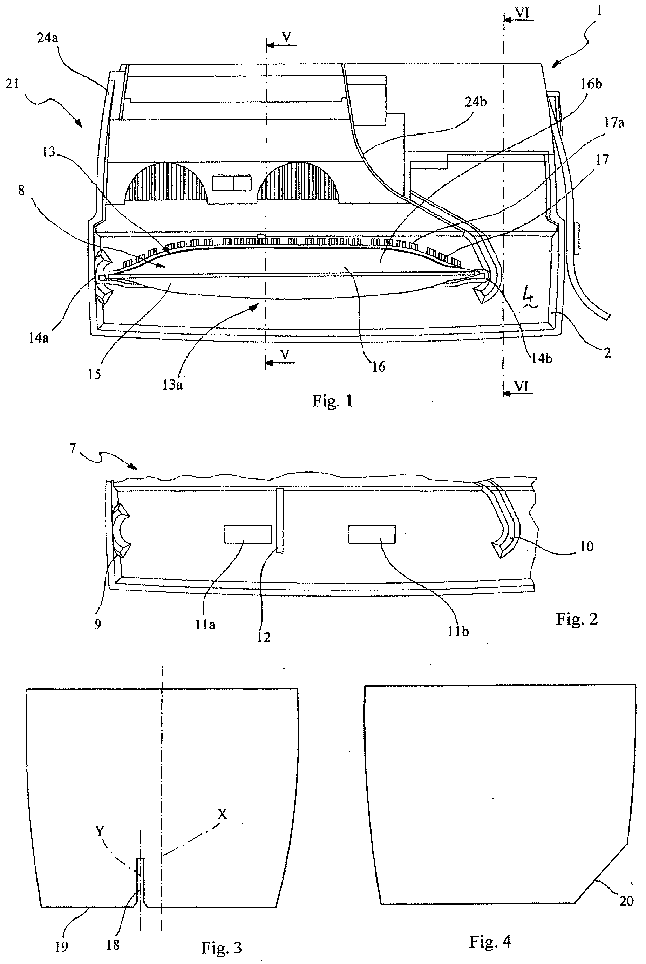

With reference to Figures 1 to 6, an aquarium filter 1 comprises a casing 2 designed to be supported straddling the upper free edge of an aquarium tank (not shown). The casing 2 is divided into two parts 2b,c, internal and external respectively in relation to said tank, connected together by a bridge-piece 2d. In part 2b a tube 3 is defined, at the base of which is a pump 28, with a related pick-up tube 28a which is immersed in the tank. For this reason the pump 28 is self-priming and, in the case of water leakage, does not cause outward spillage. At the opposite end to the pump 28, the tube 3, by passing through a passage 3b, opens into a filtering chamber 4, made in the part 2c of the casing 2 outside the tank.

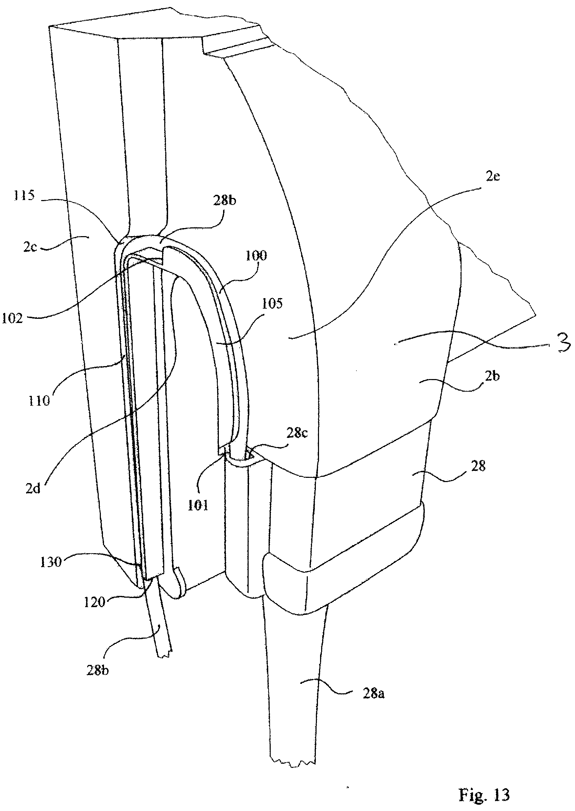

With reference to Figure 13, the pump 28 is powered via an electrical wire 28b which exits the pump 28 through a hole 28c located level with the base of the tube 3.

The wire 28b is stowed in a channel 100 made on the outer side 2e of part 2b of the casing 2.

The channel 100 comprises an initial section 101, facing the hole 28c, an end section 102, at the bridge section 2d and a side containing-lip 105 for the wire 28b.

The wire 28b is guided in the channel 100 from the pump 28 along a route that runs over the wall of the aquarium, which is straddled by and supports the casing 2.

The channel 100 comprises a second section 110 extending along part 2c of the casing 2. The section 110 guides the wire 28b downwards in a substantially upturned U configuration and comprises an initial section 105, facing the bridge section 2d, and an end section 120, at a base 5 of the chamber 4. The wire 28b is secured by friction to the casing 2 by means of a tooth 130 in the section of channel 110, near the end section 120.

Inside the chamber 4 is a seat 7 to house a removable filtration cartridge 8.

The seat 7 comprises two facing grooves 9, 10 which together form a guide for inserting corresponding opposing edges 14a, b of the cartridge 8.

The seat 7 also has two rests 11a, b at the bottom of the chamber 4. Seat 7 and cartridge 8 have respective one-way connection means and counter-means that dictate that the cartridge 8 must be inserted in a set position in relation to the direction of flow of the water to be filtered and cannot be inserted in the opposite position. In the embodiment shown in Figure 2, the connection counter-means include a blade protrusion 12, emerging at right angles to the base 5 of the chamber 4, in an asymmetrical position in relation to the guides, for example closer to guide 9 than guide 10.

In the plan view in Fig. 1, the filtering cartridge 8 has a support including two side edges 14a, b and an additional edge 19 at the base. The edges 14a, b and 19 are joined together by a back-piece 17, with which as a whole they define a pocket 13, in which a pouch formation 13a is accommodated and held.

Once the cartridge is inserted, the edge 19 abuts against the rests 11a, b. On the back-piece 17 there are openings and possibly corresponding elements 17a which can easily be populated by colonies of aerobic bacteria.

The means of one-way connection with the seat 7 comprise, on the filtering cartridge 8, a slot 18 in which the protrusion 12 is received when the cartridge 8 is correctly inserted in the seat 7. The cartridge 8 has a substantially trapezoid shape with an axis of symmetry X in relation to which the slot 18 is positioned at a distance.

In a variant of the invention, the means and counter-means of connection between the filtering cartridge 8 and the seat 7 are of the shape-to-shape connection type.

With reference to Figure 4, the slot 18 is replaced by a chamfer 20 positioned asymmetrically in relation to axis X.

The blade 12 is replaced by a joined profile of the guide 10 which marries up with the profile of the chamfer 20 when the cartridge is properly inserted in the seat 7.

The pouch conformation 13a comprises two filtering layers 15, 16 which are connected together along their edges, the first being made of synthetic wool, acting as a mechanical filter capable of holding back the solid particles in suspension in the water to be filtered, and the second, acting as a waterproof casing 16b, which contains a plurality of activated carbon granules, serving as a chemical filter.

Downstream of the filter 8, the portion 2c comprises an additional biological filter 21, of the "wet-dry" type.

This biological filter 21 comprises a quadrilateral-section tube 22, delimited longitudinally by top and bottom walls 23a, b, and transversely by the side walls 24a, b. Inside the tube 22 the biological filter comprises a plurality of straight and substantially parallel channels 25, in a quincuncial arrangement, each of which has two opposing longitudinal ends, rigidly connected to the walls 23a, b respectively. The channels 25 constitute an obstacle that can be partially submersed by the flow of water and act as a support for colonies of aerobic bacteria, performing the function of a second biological filter, inserted removably with shape-to-shape connection between the opposing side walls 24a, b and the bottom wall 23b.

The filter thus constructed, thanks to the cartridge being mounted externally (in relation to the tank) and the pump being mounted internally, offers numerous advantages. Among these are the self-priming operation of the pump, reduced size of the external part, giving the same filtering capacity, the possibility of using filtration cartridges that are as much as 25 % bigger, occupying the same amount of space, than conventional filters, the absence of siphon riser tubes on the pump pick-up tube and the substantial impossibility of water leaking outside the tank. Being housed in the channel 100 makes it possible to isolate the supply wire 28b more effectively while at the same time reducing its size.

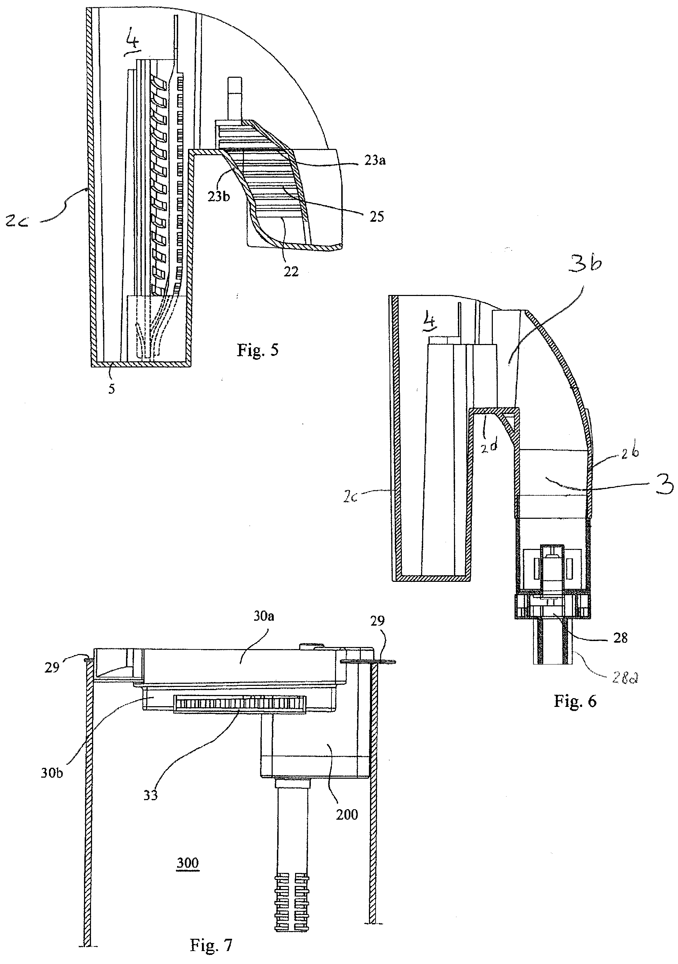

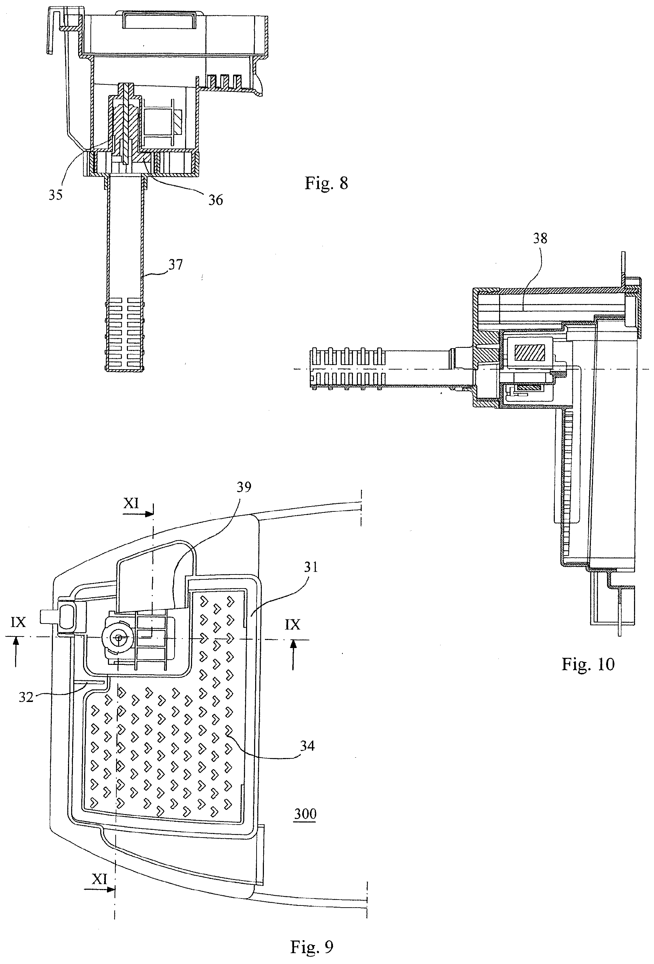

Figures 7 to 10 shows an example of an aquarium filter which is not made in accordance to the present invention. In this example, the filter 1b of the internal type comprises a casing 200 designed to be entirely contained inside the aquarium. The casing 200 also has two built-in superimposed filtration chambers 30a, b having approximately the same plan dimensions. The casing 200 also has a built-in housing 35 for a recirculating pump 36, located immediately beneath the filtering chambers 30a,b so that the plan dimensions of the pump are entirely masked in the plan dimensions of the chambers 30a,b. The pump is resin-treated in the housing 35 so as to be completely watertight.

The housing 200 comprises a tube 37 which serves as an inlet for the recirculating pump 36 and is cylindrical and extends from the housing 35 to the tank 300.

The casing 200 also has a built-in delivery tube 38 extending laterally in a direction that is substantially perpendicular to the plane in which the chambers 30a, b lie. The tube 38 conveys the water to be filtered from the outlet of the recirculating pump 36 to an outflow section 39, from which the water to be filtered falls by gravity into the chamber 30a.

The chamber 30a has a perimetral surface 31, upon which rests the horizontal filtration cartridge (not shown since it is of a similar type to the one shown in Figures 3 and 4), located at a higher level than the surface of the water in the aquarium tank. The cartridge has a slot, similar to slot 18, in an asymmetrical position, which can be connected to a projection 32 of the chamber 30a. After passing through the filtration cartridge, the water drips by gravity into the chamber 30b, inside which is housed a "wet/dry" biological filter. The chamber 30b has a bottom surface 33, from which rises a plurality of protuberances 34, in a quincuncial arrangement.

The casing 200 includes a frame 29, extending in a direction that is virtually parallel to the plane in which the filtering cartridge is lying and can be connected to the edge of the tank 300 of an aquarium to support the filter inside the tank.

As the chambers 30a, b, the recirculating pump 36 and the tubes 37, 38 are incorporated in a single compact structure, the filter 1b is small compared to operationally similar solutions. It is therefore particularly suitable for all cases where the space available for the filtration device is limited.

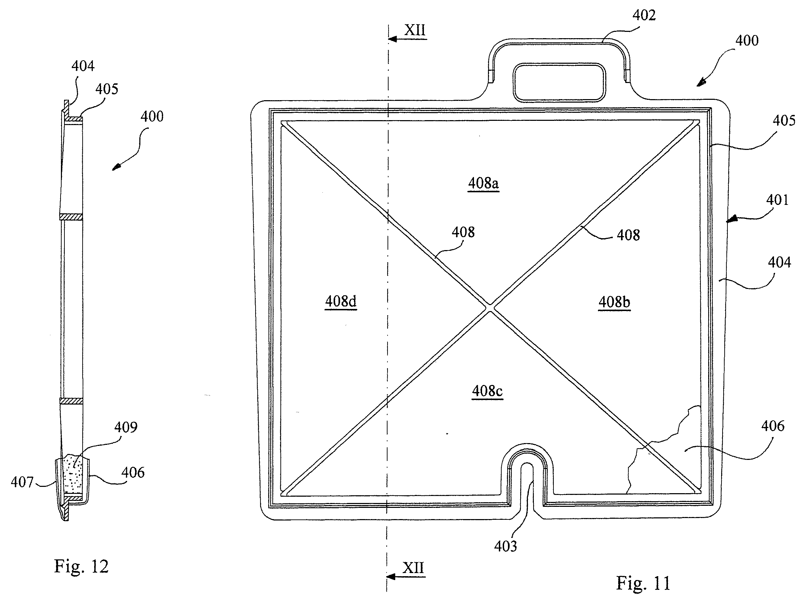

Figures 11 and 12 show, respectively, a plan and a cross-sectional view along Line XII-XII of a preferred embodiment of a filtration cartridge shown generally by 400.

Cartridge 400 comprises a polygonal-plan perimetral frame 401 with a handle 402 on one side and a slot 403 on the opposite side. The frame 401 comprises a lip 404 extending perimetrally outwards and a second lip 405 orthogonal to the preceding one. Onto these lips is fixed, for example by heat-welding, a respective filtering surface 406,407 of permeable synthetic fibre. Along the diagonals of the frame 401, two ties 408 with a section similar to that of lip 405 extend crosswise, so as to stiffen the frame, particularly with regard to torsional stress, and at the same time to define four chambers 408a, b, c, d containing a granular filtration material 409, such as activated carbon granules and/or ion exchange resins. The filtering surfaces 406,407 can be either spot- or continuously heat-welded to the ties 408 or remain free of them.

This invention solves the problems posed, with reference to said know art, affording numerous advantages compared to conventional aquarium filters.

In fact, due to the effect of the shape-to-shape connections between the filtration cartridge and the corresponding seat in the filter, this invention prevents the cartridge from being inadvertently inserted in the wrong direction.

The problems encountered with regard to filtration efficiency are solved by inserting wet/dry filters of sufficient size to improve the aeration of the water to be filtered.

Furthermore, integrating the delivery pump and recirculating pump in the filter casing enables the latter to be made more compact and to reduce its size.

## Claims

1. An aquarium filter (1) including a casing (2) with two respectively internal and external parts (2b,c), which can be arranged straddling an aquarium wall, a filtration chamber (4) arranged with a seat (7) to accommodate a cartridge (8) positioned so as to intercept a route of the water to be filtered, a pump (28) and a delivery tube (3) extending between said pump (28) and said filtration chamber (4), wherein said cartridge seat (7) is made in the external part (2c) inside said chamber (4) and said pump (28) is housed in the internal part (2b) and is connected to a delivery tube (3) **characterized in that** said delivery tube is defined in said internal part (2b) as an integral portion of said casing (2), and **in that** said tube (3) opens into said chamber (4) made in said external part (2c) and inside which said cartridge (8) is accommodated.

2. An aquarium filter according to claim 1, wherein said pump (28) is integrated into the internal part (2b) of said casing (2) at one end of said delivery tube (3).

3. An aquarium filter according to claim 2, wherein said pump (28) is provided at the base of said delivery tube (3).

4. An aquarium filter according to claim 2 or 3, wherein said casing (2) externally comprises at least one channel (100), extending along said internal part (2b), to house at least one section of a wire (28b) to electrically power said pump (28).

5. An aquarium filter according to claim 4, wherein said wire (28b) is stowed and guided in said channel (100) from said pump (28) along a route that straddles said aquarium wall.

6. An aquarium filter according to claim 5, wherein said channel (100) also extends along said external part (2c) to run downwards in a substantially upturned U configuration.

## Patentansprüche

1. Aquariumfilter (1) mit einem Gehäuse (2) mit jeweils zwei inneren und äußeren Teilen (2b, 2c), die eine Aquariumwand überspannend angeordnet werden können, mit einer Filterkammer (4), die mit einem Sitz (7) angeordnet ist, um eine Kartusche aufzunehmen, die so positioniert ist, um einen Weg des zu filternden Wassers zu unterbrechen, mit einer Pumpe (28) und einem Einleitungsrohr (3), das sich zwischen der Pumpe (28) und der Filterkammer (4) erstreckt, wobei der Kartuschensitz (7) im äußeren Teil (2c) innerhalb der Kammer (4) ausgeführt ist und die Pumpe (28) im inneren Teil (2b) aufgenommen und mit dem Einleitungsrohr (3) verbunden ist, **dadurch gekennzeichnet, dass** das Einleitungsrohr im inneren Teil (2b) als einstückiger Bereich des Gehäuses (2) ausgebildet ist, und dadurch, dass sich das Rohr (3) in die Kammer (4) öffnet, die im äußeren Teil (2c) ausgeführt ist und innerhalb der die Kartusche (8) aufgenommen ist.

2. Aquariumfilter gemäß Anspruch 1, wobei die Pumpe (28) im inneren Teil (2b) des Gehäuses (2) an einem Ende des Einleitungsrohrs (3) eingebunden ist.

3. Aquariumfilter gemäß Anspruch 2, wobei die Pumpe (28) an der Basis des Einleitungsrohrs (3) vorgesehen ist.

4. Aquariumfilter gemäß Anspruch 2 oder 3, wobei das Gehäuse (2) äußerlich zumindest einen Kanal (100) aufweist, der sich entlang des inneren Teils (2b) erstreckt, um zumindest einen Abschnitt einer Verdrahtung (28b) zur elektrisch betriebenen Pumpe (28) aufzunehmen.

5. Aquariumfilter gemäß Anspruch 4, wobei die Verdrahtung (28b) im Kanal (100) von der Pumpe (28) entlang eines Weges, der die Aquariumwand überspannt, verstaut und geführt ist.

6. Aquariumfilter gemäß Anspruch 5, wobei sich der Kanal (100) auch entlang des äußeren Teils (2c) erstreckt, um in einer im Wesentlichen nach oben gewandten U-Konfiguration nach unten zu verlaufen.

## Revendications

1. Filtre d'aquarium (1) comprenant un boîtier (2) avec deux parties respectivement interne et externe (2b, c), qui peuvent être agencées à cheval sur une paroi d'aquarium, une chambre de filtration (4) agencée avec un siège (7) pour loger une cartouche (8) positionnée afin d'intercepter un parcours de l'eau à filtrer, une pompe (28) et un tube de distribution (3) s'étendant entre ladite pompe (28) et ladite chambre de filtration (4), dans lequel ledit siège de cartouche (7) est réalisé dans la partie externe (2c) à l'intérieur de ladite chambre (4), et ladite pompe (28) est logée dans la partie interne (2b) et est raccordée à un tube de distribution (3), **caractérisé en ce que** ledit tube de distribution est défini dans ladite partie interne (2b) comme faisant partie intégrante dudit boîtier (2), et **en ce que** ledit tube (3) s'ouvre dans ladite chambre (4) réalisée dans ladite partie externe (2c) et à l'intérieur de laquelle ladite cartouche (8) est logée.

2. Filtre d'aquarium selon la revendication 1, dans lequel ladite pompe (28) est intégrée dans la partie interne (2b) dudit boîtier (2) au niveau d'une extrémité dudit tube de distribution (3).

3. Filtre d'aquarium selon la revendication 2, dans lequel ladite pompe (28) est prévue à la base dudit tube de distribution (3).

4. Filtre d'aquarium selon la revendication 2 ou 3, dans lequel ledit boîtier (2) comprend, extérieurement, au moins un canal (100), s'étendant le long de ladite partie interne (2b), pour loger au moins une section d'un fil (28b) pour alimenter électriquement ladite pompe (28).

5. Filtre d'aquarium selon la revendication 4, dans lequel ledit fil (28b) est rangé et guidé dans ledit canal (100) à partir de ladite pompe (28) le long d'un parcours qui est à cheval sur ladite paroi d'aquarium.

6. Filtre d'aquarium selon la revendication 5, dans lequel ledit canal (100) s'étend également le long de ladite partie externe (2c) pour s'étendre vers le bas dans une configuration sensiblement en forme de U retourné.
